# EUROPEAN PATENT SPECIFICATION

(11) **EP 2 212 623 B1**
(45) Date of publication and mention of the grant of the patent: **09.09.2015**
(21) Application number: 07866756.5
(22) Date of filing: 07.11.2007
(51) Int. Cl.: F24F 5/00, F24F 7/04, F24F 11/00, E04B 1/74

(54) **BUILDING STRUCTURE WITH CONTROLLED MICROCLIMATE AND METHOD OF AIR-CONDITIONING OF A BUILDING STRUCTURE**
BAUSTRUKTUR MIT GESTEUERTEM MIKROKLIMA UND LUFTKLIMATISIERUNGSVERFAHREN FÜR EINE BAUSTRUKTUR
STRUCTURE D'IMMEUBLE AVEC MICROCLIMAT CONTRÔLÉ ET PROCÉDÉ DE CLIMATISATION D'UNE STRUCTURE D'IMMEUBLE

(43) Date of publication of application: 04.08.2010
(73) Proprietor: Polifar S.r.l., 30037 Scorzè (VE) (IT); Wood Beton S.p.A., 25049 Iseo, Brescia (IT)
(72) Inventor: BIANCON, Gian, Francesco, I-30037 Scorze' (IT); SPATTI, Giovanni, Giorgio, I-25055 Pisogne (IT)
(74) Representative: Mitola, Marco
(86) International application number: PCT/IT2007/000787
(87) International publication number: WO 2009/060484

(56) References cited:
- US-A- 1 086 031
- US-A- 2 107 523
- US-A- 2 864 251
- US-A- 3 223 018
- US-A- 3 343 474
- US-A- 4 295 415

## Description

The present invention relates to a building structure and specifically to a building structure with controlled microclimate and internal ventilation system able to ensure the circulation of fresh air and heat control of the rooms inside the structure, said heat control being continuous and varying with the seasons and the years. The present invention also relates to a method of air-conditioning of a building structure.

At present, state-of-the-art building structures fitted with ventilation systems comprising air ducts arranged mainly inside the perimetral walls of the structure so as to ensure a channel of ventilation and essentially designed to remove damp from said structure are know (see for example patent document US-4295415-A). Such structures usually adopt forced ventilation systems

The known state-of-the-art solutions however present numerous disadvantages and limitations.

For example, the state-of-the-art structures are complex and expensive to produce and assemble.

In addition the state-of-the-art systems do not permit the creation of a controlled, essentially constant microclimate inside the building structure so as to equalise the internal climate of the building and reduce the energy consumption for the air-conditioning of the same.

The problem of the present invention is to produce a building structure which resolves the problems mentioned with reference to the technical note.

Such problems and limitations may be resolved by a building structure made according to claim 1 and by a method according to claim 48.

Other forms of embodiment of the invention are described in the subsequent claims.

Further features and advantages of the present invention will appear more clearly from the following description of preferred embodiment realisations, made by way of an indicative and non-limiting example, wherein:

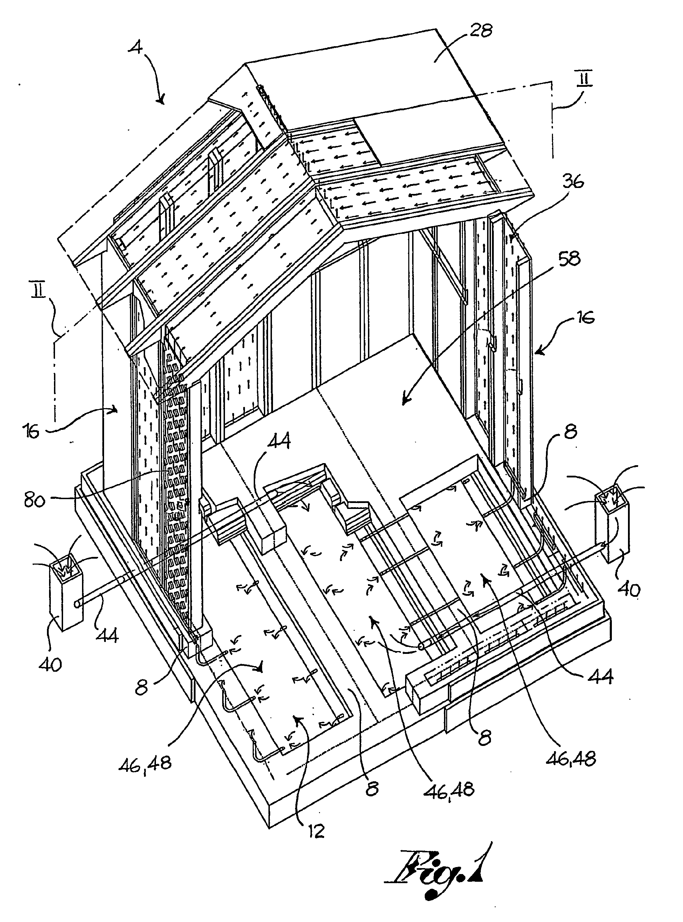

figure 1 shows a perspective view in partial cross-section of a building structure according to a form of embodiment of the present invention;

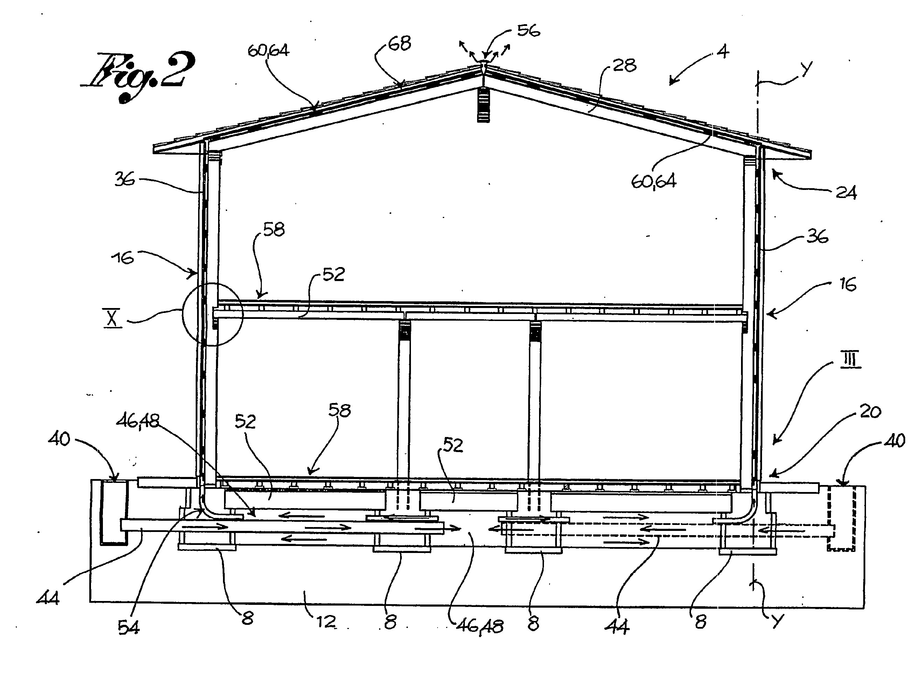

figure 2 shows a cross-section view of the structure in figure 1, along the viewing plane II-II of figure 1;
figure 3 shows a cross-section view of detail III in figure 2;

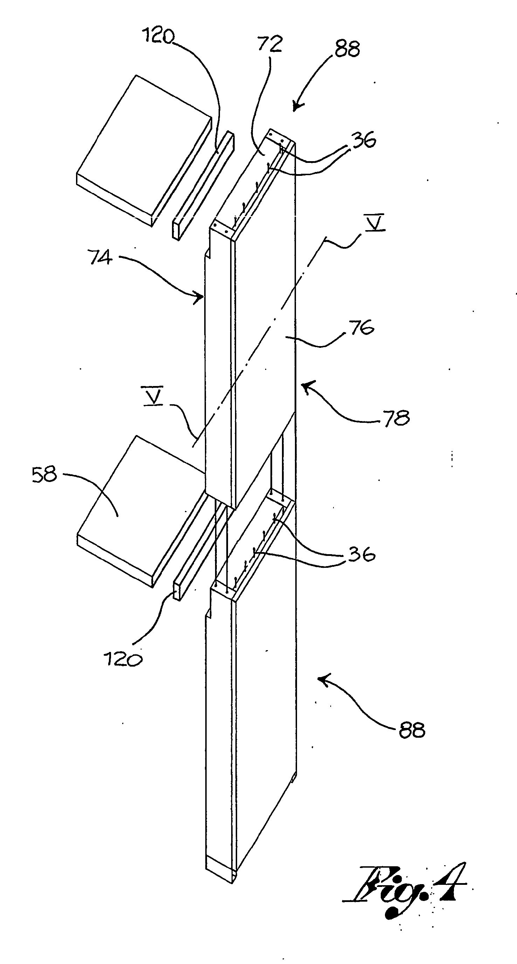

figure 4 shows a perspective view in separate parts of some of the components of the structure in figure 1;

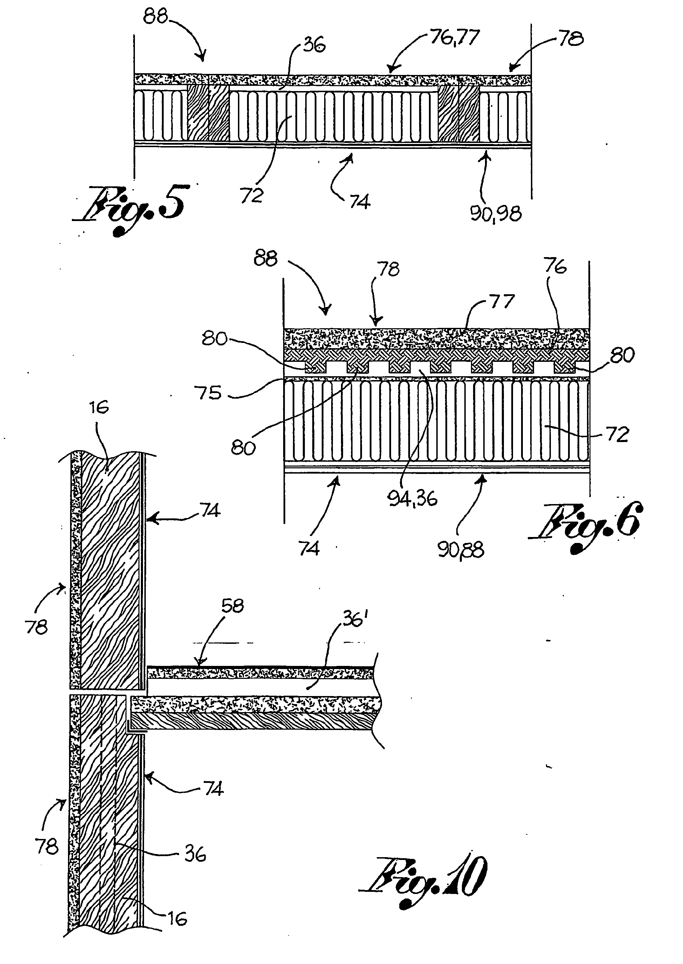

figure 5 shows a cross-section view of the components of figure 4, along the viewing line V-V in figure 4;
figures 6,7,8,9a,9b show cross-section views of the components of figure 4, along the viewing line V-V in figure 4, according to further possible embodiment variations of the present invention;
figure 10 shows a cross-section view of the detail X in figure 2, according to a possible form of embodiment of the present invention.

The elements or parts of elements common to the forms of embodiment described below will be indicated by the same numerical references.

With reference to the aforesaid figures, reference numeral 4 globally denotes a building structure with controlled microclimate according to the present invention.

The structure 4 comprises at least one foundation 8 positioned next to the ground 12 of the structure 4. According to one form of embodiment, the ground 12 is covered by a sheet in waterproof material, for example in PVC, able to prevent the evaporation of the water present in the soil due to rain and/or underground water tables.

The structure 4 comprises at least one wall 16 which extends from a lower extremity 20 to an upper extremity 24 in a vertical direction (Y-Y). The wall 16 is mechanically connected to the foundation 8 of the structure 4 at said lower extremity 20. Advantageously, the wall16 is mechanically connected to the foundation by a fixed support, at said lower extremity 20.

The structure 4 comprises in addition at least one roof 28 mechanically connected to the walls 16 of the structure 4 at the upper extremities 24.

Advantageously, the walls 16 comprise at least one delivery duct 36 able to receive and channel a flow of air along the extension of said walls, preferably from the lower extremity 20 to the upper extremity 24 and vice versa.

The structure 4 comprises at least one suction intake 40 able to suck in air from the outside of the structure 4. For example the intake 40 is positioned at ground level adjacent to the structure and preferably at least partially buried in such ground. The suction intake 40 is advantageously connected to a suction pipe 44 which introduces the air sucked in by the intake to at least one ventilation space 46 of the structure, the ventilation space 46 forming a mixing chamber 48 between the foundations 8 and the ground 12 of the structure 4.

According to one form of embodiment, the suction pipe 44 is a pipe which starts from the ventilation chamber 46 and crosses the foundations 8 of the structure at least in part to then come out in the mixing chamber 48 formed by the foundations 8, by the ventilation chamber 46 and by a relative floor 52 of the ventilation chamber 46.

Preferably, the foundations 8 comprise distribution channels 54 able to transfer the air mixed in the mixing chambers 48 to the delivery duct 36 of the wall16.

Preferably, said distribution channels 54 pass through the foundations 8 at least partially.

Advantageously, the structure comprises a chimney 56 fluidly connected to the delivery duct 36 of the walls 16, so as to expel the air received from the delivery duct of the wall to the outside of the structure 4. In other words, the air is sucked in by the suction intake, sent by the suction pipe 44 to the mixing chamber and from this to the delivery duct 36 of the walls 16; from these the air is expelled through the chimney 56, preferably positioned on the roof 28.

The roof 28 comprises in turn at least one headrace 60 fluidly connected to the delivery duct 36 of the wall 16 and with the chimney 56, preferably positioned on the top of the roof so as to increase the head between the suction intake 40 and the chimney 56 expelling the air.

Advantageously the foundations 8, the mixing chamber 48 and the relative floor 52 of the ventilation chamber 46 are thermally insulated. For example the foundations 8, the mixing chamber 48 and the floor 52 are covered by thermal insulation layers so that the air sucked in from outside can be mixed inside the thermally insulated mixing chambers 48 having as constant a temperature as possible throughout the year.

In other words, the mixing chambers 48 are advantageously insulated so as to create a sort of heat capacity which is constant over time able to bring the air to sucked in a temperature constant over time.

Preferably, said distribution, channels 54 of the foundations 8 are also thermally insulated.

Preferably, the structure 4 comprises a number of mixing chambers 48 communicating with each other by means of the distribution channels 54.

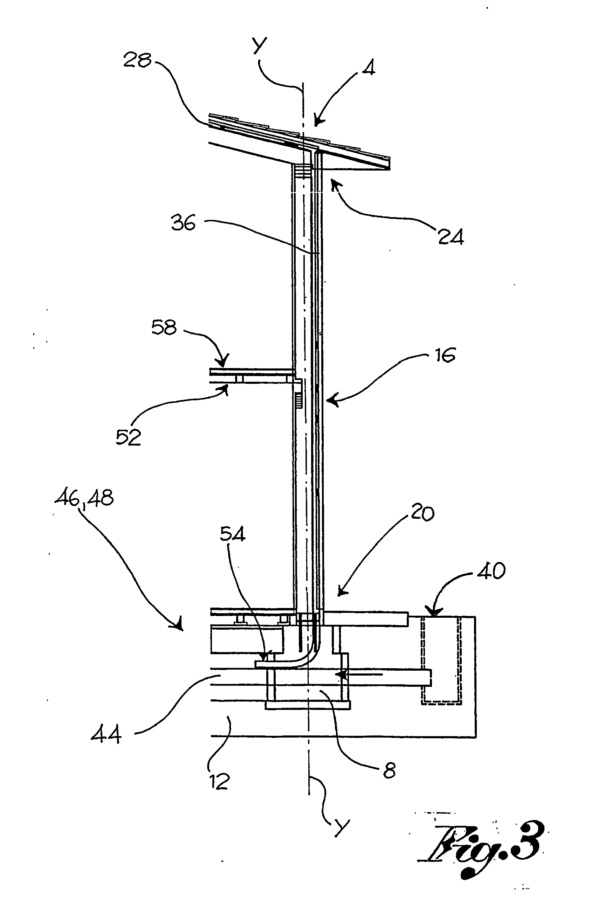

Preferably, the distribution channels 54 come out at the lower extremities 20 of the walls, at the point where said extremities 20 join the foundations 8 (figure 3).

According to one form of embodiment, the delivery ducts 36 of the walls 16 come out at the lower extremities 20 so as to join the distribution channels 54.

According to one possible form of embodiment, the flooring 52 of the ventilation chamber 46 or floorings 58 of the structure comprise delivery ducts 36' able to allow the circulation of air inside the floorings 58 of the structure, so as to produce a heat exchange between the circulating air and the floors of the building structure.

For example the delivery ducts 36' of the floors 52 may be fluidly connected with the distribution channels 54 or with the delivery ducts 36 of the walls 16. Preferably, the delivery ducts 36' of the floors put opposite walls 16 of the structure into fluid communication so as to produce circulation of air not just along the vertical extension but also along a transversal extension of the building structure, through the floorings 58 of the structure 4.

Preferably, the roof 28 comprises second delivery ducts 64 which join the delivery ducts 36 of the walls 16 at the upper extremities 24 of the walls 16.

Preferably the roof 28 is thermally insulated at least at said second delivery ducts 64; the roof 28 has an insulated layer also at the floor 68 of said roof 28.

According to one form of embodiment, the walls 16 comprise a first insulated layer 72 on at least one inner side 74 facing the inside of the structure, said first layer 72 being situated between the inside of the structure and the delivery ducts 36.

According to one form of embodiment, the first insulation layer 72 comprises polystyrene.

The first insulation layer 72 may also be extremely thin so as to allow a heat exchange between the air going through the delivery ducts 36 and the inside of the building structure. According to one form of embodiment, between the delivery ducts 36 and the first insulation layer 72 there is a soundproofing layer of mortar 75.

Alternatively, the first insulation layer 72 may be substituted for example with an internal wainscot panel, for example in wood applied directly with hermetic sealing of the delivery ducts 36.

According to one form of embodiment, the walls 16 comprise a second insulation layer 76 on the outside 78 of the structure 4, said second layer 76 being situated between the outside of the structure and the delivery ducts 36.

According to one form of embodiment, the second insulation layer 76 comprises polystyrene.

According to a preferred form of embodiment, the first and second insulation layers 72,76 enclose, at least partially, the delivery ducts 36, which are thus thermally insulated both from the inside 74 and from the outside 78.

Preferably, a layer of external cladding or thin concrete 77 is applied to the second insulation layer 76; according to one form of embodiment said external cladding 77 comprises concrete.

According to a possible form of embodiment, said first and second insulation layers 72,76 are separated by a number of spacer elements 80 which form the delivery ducts 36. For example, the spacer elements 80 are arranged in a staggered manner inside the walls so that the interstices of the adjacent spacer elements form the delivery ducts 36.

According to one possible form of embodiment, the walls 16, going from the outside 78 towards the inside 74, comprise the external layer of cladding 77 and the second insulation layer 76 to which a closure panel 90 is applied on the side opposite that of the external cladding 77. Between the closure panel 90 and the second insulation layer 76 a cavity 94 is formed which forms the delivery ducts 36 of the walls 16. The closure panel 90 may for example be made of wood or in concrete fibre and has the function of hermetically sealing the delivery ducts 36. The closure panel 90 may be associated with a covering 98 comprising for example two panels in plasterboard 102, preferably between the closure panel 90 and the covering 98 a chamber 106 is formed, preferably airtight, so as to create soundproofing of the inside of the structure. Between the covering 98 and the closure panel skirting boards may be inserted 110.

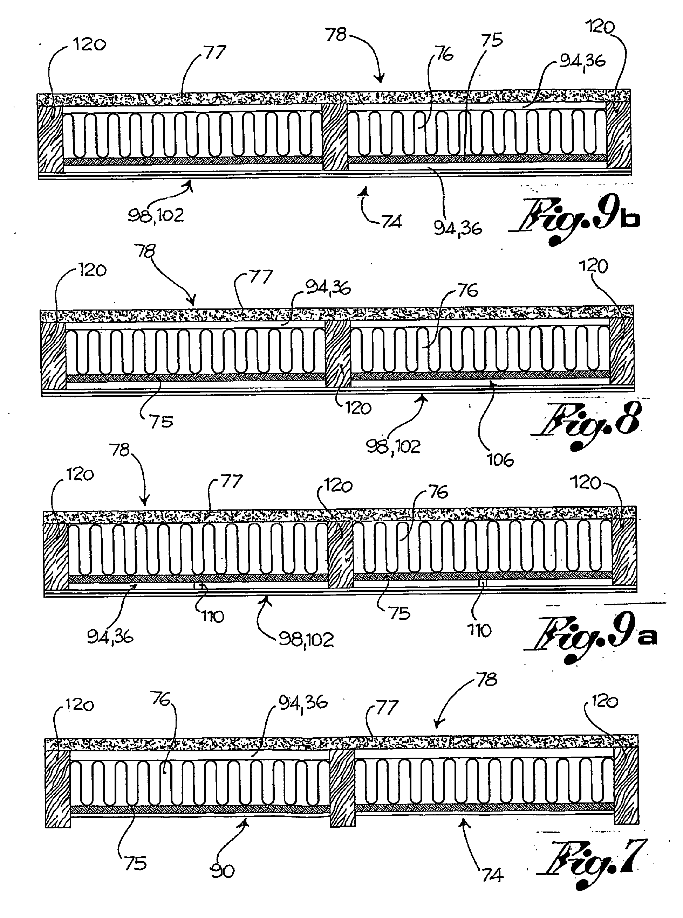

According to a further possible form of embodiment (figure 9b), going from the outside 78 towards the inside 74, the walls 16 comprise the external layer of cladding 77, the first delivery ducts 94, 36 and the second insulation layer 76 to which a soundproofing layer 75 is applied on the side opposite that of the external cladding 77. To said soundproofing layer 75 a covering 98 is applied, for example in the form of plasterboard panels 102, so as to form a cavity 94 which defines further delivery ducts 36 in the walls 16. In other words, the wall16 comprises delivery ducts 36 both on the inside 74 and on the outside 78.

According to a preferred form of embodiment, the walls 16 are made from prefabricated panels 88 placed alongside and fixed to each other. For example the prefabricated panels 88 are arranged along the perimeter of the structure 4, and attached to the foundations 8, so that all the perimetral walls are crossed by delivery ducts 36.

According to one possible form of embodiment, the panels are joined to the structure by means of joists 120, preferably in laminated wood, which are joined to the panels and to the concrete structure using iron and resin.

Preferably, the panels 88 are set alongside each other in such a way that the respective delivery ducts 36 of adjacent panels 88 are fluidly separate from each other.

The roof 28 is preferably made from prefabricated panels 88 fitted with second delivery ducts 64.

Preferably, the panels 88 of the walls 16 and of the roof 28 are essentially similar to each other so that the respective delivery ducts 36,64 are joined without any seams or any variation of cross-section of transit at said upper extremities 24 of the walls 16.

According to a preferred form of embodiment, the structure comprises at least two suction intakes 40, with different exposures, fitted with separate suction pipes 44 able to deliver the sucked-in air to different mixing chambers 48.

In addition, the delivery ducts 36 of the perimetral panels 88 are fluidly connected to said chimney 56 through the second delivery ducts 64 of the panels 88 of the roof 28. The chimney 56 is fluidly connected to the ventilation channels of all the walls.

According to one possible form of embodiment, the structure 4 comprises forced ventilation means at said chimney 56 and/or said suction intake 40.

The functioning of a building structure according to the invention will now be described.

Specifically, the structure produces a controlled internal microclimate thanks to the continuous passage of air from the intake to a chimney preferably positioned on the roof.

This air is thermally regulated thanks to a heat exchange with the ventilation chamber and with the mixing chamber, which receive thermal energy from the ground 12, so as to encourage insulation of the interior area of the structure.

The suction and the delivery of the air takes place by means of a natural chimney effect, that is substantially free of means of forced ventilation, thanks to the difference in temperature and pressure between the air sucked-in at the ground level which the structure lies on and the air expelled from the chimney.

According to the invention the structure foresees thermal insulation of the entire portion of the ventilation chamber both at the foundations and at the floor. This ensures as constant a temperature as possible of the ventilation chamber throughout the year.

The ventilation chamber can thus function as a sort of heat storage constant in time and able to equalise the air sucked-in from the outside thanks to an advantageous heat exchange with the same. Specifically, the thermal energy transmitted from the ground 12 to the ventilation chamber 46 and to the mixing chamber 48 is constant in time, as well as being natural and totally cost free for the user.

Furthermore, the ventilation chamber functions advantageously as a sort of thermal flywheel in that it produces a sort of balancing of the indoor temperatures of the structure even when the suction intake and/or chimney are closed. In other words the ventilation chamber tends to produce a continuous heat exchange with the air inside the structure so as to create temperature differences which cause continuous circulation of the air inside the building structure.

The ventilation chamber can be used as a heat exchanger able to air-condition the entire structure. According to one form of embodiment, it is possible to channel conditioned air through the ventilation chamber so that said air can circulate through all the ducts and delivery and ventilation pipes of the structure, including the floors.

Consequently, the air heated or cooled by the ventilation chamber can be advantageously channelled through all the ducts and distribution channels of the structure to improve climatisation. If necessary, it's possible to fit means of heating or cooling the air, situated for example in the ventilation chamber, so as to increment the effect and accumulation of heat exchange between the ventilation chamber and the air.

If necessary, it's possible to provide for the insertion of means of accumulating the heat inside the ventilation chamber 46 so as to produce heat storage able to store thermal energy. For example said means of heat accumulation could comprise stones, water, heat exchangers and similar.

The heat exchange improves the indoor climatisation of the building.

In fact, in summer the hot air from outside is cooled upon contact with the ventilation chamber and specifically, is brought to a lower temperature than the outdoor temperature. This way the temperature inside the building is kept cooler and the costs and energy consumption required for indoor cooling are reduced.

In winter, the outside air is heated on contact with the ventilation chamber, where the temperature is about 7-8 degrees.

This way air which is hotter than the outdoor air is channelled through the walls and the heating of the indoor areas of the structure is improved.

Advantageously, the chimney is situated on the summit of the roof of the structure so as to benefit from the maximum head possible between the point of suction and the point of delivery.

In addition, the chimney is preferably positioned centrally or symmetrically in relation to the roof so as not to be influenced by the exposure of the structure to the sun. The intakes may be multiple so as to resolve specific requirements; for example, it is possible to provide four intakes at the four cardinal points, so as to mediate and optimise over time the effect of suction of the air from the outside.

Preferably, the structure foresees at least two separate suction intakes, situated so as to have different exposures, so as to guarantee the regularity of functioning of the air flow during various hours of the day, that is in relation to varying positions of the sun and therefore of the local temperature of the air outside the structure.

Advantageously, the structure according to the present invention comprises means of controlling and managing the flow of ventilation inside the structure, able to regulate the flow of air using, for example, the opening and closing of the chimney and of the suction intakes, and activate any forced ventilation or air-conditioning devices, where present.

It is possible to foresee the use of temperature, pressure and humidity sensors, for example at the inlets and outlets of the distribution channels and of the delivery ducts; said sensors recognise the temperature, pressure and humidity values and send them to the control and management device so as to modify as desired the internal climatisation of the structure.

As one may deduct from the description, the building structure according to the invention makes it possible to overcome the problems presented in the technical note.

Specifically, the building structure makes it possible to produce a continuous flow of air without the need to use forced ventilation systems, with consequent energy savings.

The flow of air is made possible thanks mainly to the difference of atmospheric pressure, temperature and humidity between the points of intake and expulsion of the air.

In other words, the building structure according to the invention forms a natural pump which generates throughout the sufficiently insulated and airtight edifice, a flow of continuous fresh air which exchanges heat with the ground in the ventilation chamber.

The temperature in the ground of the ventilation chamber is, in fact, more or less constant throughout the year and the heat exchange between the air sucked in from outside and the ventilation chamber is able to equalise the temperature of the flow of air channelled inside the structure through the perimetral walls and roof.

In fact, the air sucked in from outside, after the heat exchange with ground in the ventilation chamber, is heated during the winter and at the same time cooled in summer.

As a result, during the winter the flow of air channelled through the walls creates a thermal barrier to the dispersion of heat towards the outside of the building with a consequent energy saving for the heating of the building.

At the same time, in summer the flow of air taken in is cooled by the ventilation chamber and therefore a flow of air which is cooler than the air outside is directed through the walls, thus limiting the entrance of heat from the outside of the building and reducing energy consumption for cooling the indoor areas.

In addition, thanks to the thermal insulation of the walls, the temperature of the flow of air inside the walls remains as constant as possible over time.

In other words, thanks to the constant temperature of the air channelled through the walls of the structure, a controlled microclimate inside the said structure can be ensured.

Such microclimate makes it possible to limit heating and air-conditioning costs of the habitation with obvious economic and environmental benefits.

In addition, the flow of air generated takes in air directly from salubrious inlets external to the building and expels into the atmosphere unhealthy gases such as radon rising up from the earth's crust.

The system also equalises the humidity of the walls and roof with the atmospheric humidity and reduces the formation of condensation inside said walls.

A technician skilled in this area may make numerous modifications and adjustments to the structures described above so as to satisfy contingent and specific requirements, all moreover contained within the sphere of the invention as defined by the following claims.

## Claims

1. Building structure (4) with controlled microclimate comprising
- at least one foundation (8) situated on a ground (12) of the structure (4),
- at least one wall (16) extending from a lower extremity (20) to an upper extremity (24) in a vertical direction (Y-Y), the wall (16) being mechanically connected to the foundation (8) of the structure (4),
- a roof (28) mechanically connected to said wall (16),
wherein
- the wall (16) comprises at least one delivery duct (36) able to receive and channel a flow of air, **characterised in that**
- the structure (4) comprises at least one suction intake (40) able to suck in air from the outside of the structure (4),
- the suction intake (40) is connected to a suction pipe (44) which emits air into a ventilation chamber (46) forming at least one mixing chamber(48) situated between the foundations (8) and the ground (12) of the structure (4),
- said foundations (8) comprise distribution channels (54) able to conduct the air mixed in the mixing chambers (48) into the delivery duct (36) of the wall (16).

2. Structure (4) according to claim 1, wherein the structure (4) comprises at least one chimney (56) fluidly connected to the delivery duct (36) of the wall (16), so as to expel the air received from the delivery duct (36) of the wall (4) outside the structure (4).

3. Structure (4) according to claim 1 or 2, wherein the roof (28) comprises at least one headrace (60) fluidly connected with the delivery duct (36) of the wall (16) and the chimney (56).

4. Structure (4) according to any of the previous claims, wherein said distribution channels (54) pass at least partially through the foundations (8).

5. Structure (4) according to any of the previous claims, wherein the delivery ducts (36) of the walls (16) come out at the lower extremities (20) so as to join the distribution channels (54).

6. Structure (4) according to any of the previous claims, wherein the roof (28) comprises second delivery ducts (64) which are connected to the delivery ducts (36) of the walls (16) at the upper extremities (24) of the walls (16).

7. Structure (4) according to any of the previous claims, wherein the floor (52) comprises delivery ducts (36') able to permit the circulation of air inside the floorings (58) of the structure, so as to produce a heat exchange between the circulating air and the floorings (58) of the building structure, wherein said delivery ducts (36') of the floors are fluidly connected with the distribution channels (54) and/or delivery ducts (36) of the walls.

8. Structure (4) according to any of the previous claims, wherein said walls (16) comprise a first insulation layer (72) on at least one interior side (74) facing the inside of the structure, said first layer (72) being interposed between the inside of the structure and the delivery ducts (36).

9. Structure (4) according to claim 8, wherein the walls (16) comprise a second insulation layer (76) on at least one exterior side (78) of the structure, said second layer (76) being interposed between the outside of the structure (4) and the delivery ducts (36).

10. Structure (4) according to claims from 8 to 9, wherein said first and second insulation layer (72,76) enclose the delivery ducts (36), which prove thermally insulated.

11. Structure (4) according to any of the previous claims, wherein the walls (16), moving from the outside (78) towards the inside (74), comprise the layer of external cladding (77), first delivery ducts (94,36), second insulation layer (76), and soundproofing layer (75), to which the covering (98) is attached, so as to form a cavity (94) which forms further delivery ducts (36) of the walls (16).

12. Structure (4) according to any of the previous claims, comprising means of forced ventilation situated next to the said chimney (56) and/or said suction intakes (40).

13. Structure (4) according to any of the previous claims, comprising means of controlling and managing the flow of internal ventilation of the structure, able to regulate the flow of air by acting on the aperture and closure of the chimney and of the suction intakes.

14. Structure (4) according to any of the previous claims, comprising, next to said ventilation chamber (46) and/or said mixing chamber (48), internal means of heat accumulation so as to produce a heat storage able to store thermal energy.

15. Method of air-conditioning of a building structure according to any of the claims from 1 to 14, comprising the phases of:
sucking in air through at least one suction intake (40),
channelling the air sucked in to a ventilation chamber (46) of the structure so as to produce heat exchange between the air sucked in and the ventilation chamber (46),
and channel the air conditioned in the ventilation chamber (46) inside the delivery ducts (36) situated in the walls (16) of the structure.

## Patentansprüche

1. Baustruktur (4) mit gesteuertem Mikroklima, umfassend
- mindestens ein Fundament (8), das sich auf einem Grund (12) der Struktur (4) befindet,
- mindestens eine Wand (16), die sich von einem unteren Ende (20) zu einem oberen Ende (24) in einer vertikalen Richtung (Y-Y) erstreckt, wobei die Wand (16) mechanisch mit dem Fundament (8) der Struktur (4) verbunden ist,
- ein Dach (28), das mechanisch mit der Wand (16) verbunden ist,
wobei
- die Wand (16) mindestens eine Förderleitung (36) umfasst, die in der Lage ist, einen Luftstrom aufzunehmen und zu kanalisieren, **dadurch gekennzeichnet, dass**
- die Struktur (4) mindestens eine Ansaugöffnung (40) umfasst, die in der Lage ist, Luft vom Äußeren der Struktur (4) einzusaugen,
- die Ansaugöffnung (40) mit einem Saugrohr (44) verbunden ist, das Luft in eine Lüftungskammer (46) abgibt, die mindestens eine Mischkammer (48) bildet, die sich zwischen den Fundamenten (8) und dem Grund (12) der Struktur (4) befindet,
- die Fundamente (8) Verteilungskanäle (54) umfassen, die in der Lage sind, die in den Mischkammern (48) gemischte Luft in die Förderleitung (36) der Wand (16) zu leiten.

2. Struktur (4) nach Anspruch 1, wobei die Struktur (4) mindestens einen Schornstein (56) umfasst, der in Fluidverbindung mit der Förderleitung (36) der Wand (16) ist, um die von der Förderleitung (36) der Wand (4) aufgenommene Luft zum Äußeren der Struktur (4) auszustoßen.

3. Struktur (4) nach Anspruch 1 oder 2, wobei das Dach (28) mindestens ein Obergerinne (60) umfasst, das in Fluidverbindung mit der Förderleitung (36) der Wand (16) und dem Schornstein (56) ist.

4. Struktur (4) nach einem der vorhergehenden Ansprüche, wobei die Verteilungskanäle (54) zumindest teilweise durch die Fundamente (8) verlaufen.

5. Struktur (4) nach einem der vorhergehenden Ansprüche, wobei die Förderleitungen (36) der Wände (16) an den unteren Enden (20) herauskommen, um mit den Verteilungskanälen (54) zusammengeführt zu werden.

6. Struktur (4) nach einem der vorhergehenden Ansprüche, wobei das Dach (28) zweite Förderleitungen (64) umfasst, die mit den Förderleitungen (36) der Wände (16) an den oberen Enden (24) der Wände (16) verbunden sind.

7. Struktur (4) nach einem der vorhergehenden Ansprüche, wobei der Boden (52) Förderleitungen (36') umfasst, die in der Lage sind, die Zirkulation von Luft in den Bodenbelägen (58) der Struktur zu erlauben, um einen Wärmeaustausch zwischen der zirkulierenden Luft und den Bodenbelägen (58) der Baustruktur zu erzeugen, wobei die Förderleitungen (36') der Böden in Fluidverbindung mit den Verteilungskanälen (54) und/oder Förderleitungen (36) der Wände sind.

8. Struktur (4) nach einem der vorhergehenden Ansprüche, wobei die Wände eine erste Isolationsschicht (72) an mindestens einer inneren Seite (74) umfassen, die dem Inneren der Struktur zugewandt ist, wobei die erste Schicht (72) zwischen dem Inneren der Struktur und den Förderleitungen (36) eingesetzt ist.

9. Struktur (4) nach Anspruch 8, wobei die Wände (16) eine zweite Isolationsschicht (76) an mindestens einer äußeren Seite (78) der Struktur umfassen, wobei die zweite Schicht (76) zwischen dem Äußeren der Struktur (4) und den Förderleitungen (36) eingesetzt ist.

10. Struktur (4) nach Anspruch 8 bis 9, wobei die erste und zweite Isolationsschicht (72, 76) die Förderleitungen (36) einschließt, die dadurch thermisch isoliert sind.

11. Struktur (4) nach einem der vorhergehenden Ansprüche, wobei die Wände (16) sich vom Äußeren (78) zum Inneren (74) bewegend die Schicht aus äußerer Verkleidung (77), ersten Förderleitungen (94, 36), zweiter Isolationsschicht (76) und Schallschutzschicht (75) umfassen, an der die Abdeckung (98) angebracht ist, um einen Hohlraum (94) zu bilden, der weitere Förderleitungen (36) der Wände (16) bildet.

12. Struktur (4) nach einem der vorhergehenden Ansprüche, umfassend Zwangsbelüftungsmittel, die sich neben dem Schornstein (56) und/oder den Ansaugöffnungen (40) befinden.

13. Struktur (4) nach einem der vorhergehenden Ansprüche, umfassend Mittel zum Steuern und Verwalten der Strömung der Innenbelüftung der Struktur, die in der Lage sind, den Luftstrom durch Einwirken auf die Öffnung und Schließung des Schornsteins und der Ansaugöffnungen zu regulieren.

14. Struktur (4) nach einem der vorhergehenden Ansprüche, neben der Lüftungskammer (46) und/oder der Mischkammer (48) umfassend innere Wärmestauungsmittel, um einen Wärmespeicher zu erzeugen, der in der Lage ist, thermische Energie zu speichern.

15. Luftklimatisierungsverfahren für eine Baustruktur nach einem der Ansprüche 1 bis 14, umfassend die Phasen:
Einsaugen von Luft durch mindestens eine Ansaugöffnung (40),
Kanalisieren der in eine Lüftungskammer (46) der Struktur eingesaugten Luft, um einen Wärmeaustausch zwischen der eingesaugten Luft und der Lüftungskammer (46) zu erzeugen, und die in der Lüftungskammer (46) klimatisierte Luft in den Förderleitungen (36) zu kanalisieren, die sich in den Wänden (16) der Struktur befinden.

## Revendications

1. Structure d'immeuble (4) avec microclimat contrôlé comprenant
- au moins une fondation (8) située sur un sol (12) de la structure (4),
- au moins un mur (16) s'élevant verticalement (Y-Y) depuis une extrémité inférieure (20) jusqu'à une extrémité supérieure (24), le mur (16) étant relié mécaniquement à la fondation (8) de la structure (4),
- un toit (28) relié mécaniquement audit mur (16),
dans laquelle
- le mur (16) comprend au moins une gaine de distribution (36) capable de recevoir et de canaliser un flux d'air,
caractérisée en que
- la structure (4) comprend au moins une prise d'air (40) capable d'aspirer l'air depuis l'extérieur de la structure (4),
- la prise d'air (40) est raccordée à un conduit d'aspiration (44) qui achemine l'air dans une chambre de ventilation (46) formant au moins une chambre de mélange (48) située entre les fondations (8) et le sol de la structure (4),
- lesdites fondations (8) comprennent des conduits de distribution (54) capables d'acheminer l'air mélangé des chambres de mélange (48) dans la gaine de distribution (36) du mur (16).

2. Structure (4) selon la revendication 1, **caractérisée par le fait que** la structure (4) comprend au moins une cheminée (56) raccordée de manière fluidique à la gaine de distribution (36) du mur (16) de manière à expulser l'air reçu de la gaine de distribution (36) du mur (16) à l'extérieur de la structure (4).

3. Structure (4) selon les revendications 1 ou 2, **caractérisée par le fait que** le toit (28) comprend au moins un canal d'amenée (60) raccordée de manière fluidique à la gaine de distribution (36) du mur (16) et à la cheminée (56).

4. Structure (4) selon une des revendications précédentes, **caractérisée par le fait que** lesdits conduits de distribution (54) traversent au moins partiellement les fondations (8).

5. Structure (4) selon une des revendications précédentes, **caractérisée par le fait que** les gaines de distribution (36) des murs (16) débouchent au niveau des extrémités inférieures (20) de manière à rejoindre les gaines de distribution (54).

6. Structure (4) selon une des revendications précédentes, **caractérisée par le fait que** le toit (28) comprend d'autres gaines de distribution (64) raccordées aux gaines de distribution (36) des murs (16) au niveau de leur extrémité supérieure (24).

7. Structure (4) selon une des revendications précédentes, **caractérisée par le fait que** le plancher (52) comprend des gaines de distribution (36') permettant à l'air de circuler à l'intérieur des planchers (58) de la structure, de manière à produire un échange de chaleur entre l'air circulant et les revêtements de sol (58) de la structure d'immeuble, dans laquelle lesdites gaines de distribution (36') des planchers sont raccordées de manière fluidique aux conduits de distribution (54) et/ou aux gaines de distribution (36) des murs.

8. Structure (4) selon une des revendications précédentes, **caractérisée par le fait que** lesdits murs (16) comprennent une première couche isolante (72) sur une face intérieure (74) au moins du côté intérieur de la structure, ladite première couche (72) étant insérée entre l'intérieur de la structure et les gaines de distribution (36).

9. Structure (4) selon la revendication 8, **caractérisée par le fait que** les murs (16) comprennent une deuxième couche isolante (76) sur une face extérieure (78) au moins de la structure, ladite deuxième couche (76) étant insérée entre l'extérieur de la structure (4) et les gaines de distribution (36).

10. Structure (4) selon les revendications 8 et 9, **caractérisée par le fait que** lesdites première et deuxième couches isolantes (72, 76) entourent les gaines de distribution (36) qui sont thermiquement isolées.

11. Structure (4) selon une des revendications précédentes, **caractérisée par le fait que** les murs (16), allant de l'extérieur (78) vers l'intérieur (74) comprennent la couche d'habillage extérieur (77), les premières gaines de distribution (94, 36), la deuxième couche isolante (76) et la couche d'insonorisation (75), à laquelle le revêtement (98) est fixé, de manière à constituer une cavité (94) formant d'autres gaines de distribution (36) des murs (16).

12. Structure (4) selon une des revendications précédentes, comprenant des dispositifs de ventilation forcée à proximité des cheminées (56) et/ou des prises d'air (40).

13. Structure (4) selon une des revendications précédentes, comprend des dispositifs de commande et de gestion du flux de ventilation interne de la structure, permettant de réguler le débit d'air en agissant sur l'ouverture et la fermeture des cheminées et des prises d'air.

14. Structure (4) selon une des revendications précédentes, comprenant, au-delà desdites chambres de ventilation (46) et/ou de mélange (48), des dispositifs internes d'accumulation de la chaleur de manière à stocker l'énergie thermique.

15. Procédé de climatisation d'une structure d'immeuble selon une des revendications 1 à 14 comprenant les étapes suivantes :
aspiration de l'air par au moins une prise d'air (40),
acheminement de l'air aspiré vers une chambre de ventilation (46) de la structure de manière à produire un échange de chaleur entre l'air aspiré et la chambre de ventilation (46) et acheminer l'air climatisé de la chambre de ventilation (46) vers les gaines de distribution (36) situées dans les murs (16) de la structure.
